# EUROPÄISCHE PATENTSCHRIFT

(11) **EP 0 512 187 B1**
(45) Veröffentlichungstag und Bekanntmachung des Hinweises auf die Patenterteilung: **26.07.1995**
(21) Anmeldenummer: 91810835.8
(22) Anmeldetag: 29.10.1991
(51) Int. Cl.: B29C 49/00, B65D 81/03

(54) **Polsterungselement zum Verpacken von Körpern und Vorrichtung zum Herstellen eines Polsterungselementes**
Cushioning element for packaging articles and apparatus for the manufacturing of a cushioning element
Elément de rembourrage pour l'emballage d'objets et dispositif pour la fabrication d'un élément de rembourrage

(30) Priorität: 03.05.1991 CH 1337/91
(43) Veröffentlichungstag der Anmeldung: 11.11.1992
(73) Patentinhaber: Chappuis, Michel, 3423 Ersigen (CH)
(72) Erfinder: Chappuis, Michel, 3423 Ersigen (CH)
(74) Vertreter: Tschudi, Lorenz

(56) Entgegenhaltungen:
- FR-A- 991 671
- US-A- 3 087 845
- US-A- 3 575 757
- US-A- 3 768 724
- US-A- 3 817 803
- US-A- 4 029 539
- US-A- 4 551 379

## Beschreibung

Die vorliegende Erfindung bezieht sich auf ein Polsterungselement zum Verpacken von Körpern, das aus zwei übereinanderliegenden Kunststoffolienbahnen, die mittels Schweissstellen miteinander verbunden sind, gebildet ist. Im weiteren umfasst die Erfindung eine Vorrichtung zum Herstellen eines Polsterungselementes mit je einer Einrichtung zum Zuführen und zum Verschweissen von Kunststoffolien.

Zum Verpacken und/oder Polstern von irgendwelchen Körpern oder Gebilden sind uns aus dem täglichen Gebrauch Styroporschnitzel, Formteile aus Styropor oder Kunststoffmatten mit mehr oder weniger grossen Luftkissen, die im Tiefziehverfahren hergestellt worden sind, allgemein bekannt.

Formteile aus Styropor sind relativ teuer in der Herstellung. Sie sind insbesondere zum Verpacken von in grossen Serien hergestellten, gleichen Körpern vorgesehen. Solche Formteile sind sperrig, beanspruchen relativ viel Raum für die Lagerhaltung und erfordern einen relativ grossen Arbeitsaufwand für deren Bereitstellung zur richtigen Zeit am richtigen Ort. Einfacher kann beispielsweise das Verpackungs- und Polsterungsproblem von Körpern mit den bekannten Styroporschnitzeln gelöst werden. Solche Schnitzel können in einem Silo am Verpackungsort gelagert sein und zum Auffüllen der Zwischenräume zwischen dem zu verpackenden Körper und einem Verpackungsbehälter verwendet werden. Uns allen ist das Problem bekannt, das sich insbesondere beim Auspacken von in Styroporformteilen oder mit Styroporschnitzeln verpackten Körpern stellt. Oftmals elektrostatisch aufgeladene Styroporrestteile lassen sich nur mit grosser Mühe vom ausgepackten Körper entfernen. Ein weiteres Problem stellt vor allem in Privathaushaltungen die Entsorgung solcher Verpackungsmaterialien dar. Sie gelangen praktisch ausnahmslos in den Kehricht.

Die eingangs genannten Kunststoffmatten mit den Luftkissen können am Verpackungsort, beispielsweise von grossen Rollen, in der erforderlichen Grösse abgeschnitten werden. Der zu verpackende Körper wird dann ein oder mehrere Male mit der Kunststoffmatte umwickelt und in den Verpackungsbehälter geschoben. Eventuell müssen weitere Kunststoffmattenteile dazu verwendet werden, um noch vorhandene Hohlräume im Verpackungsbehälter aufzufüllen. Diese Verpackungsart ist für in grossen Serien hergestellte Körper zu aufwendig. Auch das Entsorgen dieser Kunststoffmatten stellt gewisse Probleme dar, da heute vielerorts Entsorgungsgebühren nach dem anfallenden Entsorgungsvolumen bezahlt werden müssen. Es kommt niemandem in den Sinn, zum Reduzieren des Entsorgungsvolumens die vielen hunderte, oft tausende von kleinen Luftkissen solcher Kunststoffmatten aufzustechen, damit die eingeschlossene Luft entweichen kann.

Es ist die Aufgabe der vorliegenden Erfindung, dem Markt ein Element zum Verpacken und/oder Polstern von Körpern anzubieten, das sich zum Verpacken von in grossen Serien hergestellten Körpern ebenso eignet als auch zum Verpacken von nur in kleinen Serien vorliegenden Körpern. Es soll dabei darauf geachtet werden, dass der Lagerraumbedarf an Verpackungs- und/oder Polsterungsmaterialien am Verpackungsort gering ist und dass das Verpackungs- und/oder Polsterungsmaterial am Auspackungsort ohne grossen Aufwand geeignet entsorgt werden kann.

Diese Aufgabe wird mit einem Polsterungselement gelöst, das die im Patentanspruch 1 aufgeführten Merkmale aufweist. Das Polsterungselement wird mit einer Vorrichtung gemäss Patentanspruch 8 hergestellt.

In der US 3 817 803 ist eine Vorrichtung zum Verschweissen von Kunststoffolien gezeigt, mit welcher Verpackungsmaterial erzeugt wird, das rechteckförmige, mit Luft gefüllte Kammern aufweist. Die gegenseitigen Abstände von Längsschweissnähten können durch Verstellen von Schweissscheiben auf Wellen einer ersten Schweissstation verändert werden. Ebenfalls sind die Abstände von quer verlaufenden Schweissnähten durch das Anbringen von mehr oder weniger schweissbalken auf Walzen einer zweiten Schweissstation veränderbar. Zum Erzeugen des Verpackungsmaterials sind als Kunststoffolien eine Art Schrumpffolien vorgesehen. Das Verpackungsmaterial mit den rechteckförmigen Kammern wird abschliessend zum Herstellungsprozess durch einen Ofen geführt und schnell aufgeheizt, jedoch so, dass die in den Kammern eingeschlossene Luft praktisch nicht erhitzt wird. Die Kunststoffolien schrumpfen bei diesem Vorgang zusammen und die Kammern erscheinen als stark mit Luft gefüllt und erhalten eine bestimmte Festigkeit. Dieser Vorgang ist relativ aufwendig und teuer.

Das erfindungsgemässe Polsterungselement besteht aus zwei übereinanderliegenden Kunststoffolienbahnen, die durch mehrere im wesentlichen rechtwinklig zueinander verlaufende Schweissnähte miteinander verbunden sind. Durch die Schweissnähte wird in jedem Polsterungselement mindestens eine für sich abgeschlossene Kammer gebildet. Vorzugsweise besteht jedes der Polsterungselemente aus mehreren Kammern. Jede dieser Kammern ist bei der Herstellung des Polsterungselementes wahlweise mit Luft aufblasbar. Durch eine geeignete Auswahl von nicht, teilweise oder ganz mit Luft gefüllten Kammern kann dem Polsterungselement eine individuelle, dem zu verpackenden Körper angepasste Form gegeben werden. Ein starkes Aufblasen von einzelnen Kammern wird durch ein Durchtrennen der beiden Folienbahnen längs von zwei parallel zueinander verlaufenden Seiten der Kammern erreicht. Beim Aufblasen werden diese eingeschnürt. Die Kammerdicke wird gesteigert.
Die Anpassungsfähigkeit des Polsterungselementes an den zu verpackenden Körper wird durch die Möglichkeit der unterschiedlichen Gestaltung der Kammern bezüglich ihrer Länge und Breite zusätzlich erhöht. Polsterungselemente, die lediglich aus einer oder aus ein paar wenigen mit Luft gefüllten Kammern bestehen, können anstelle von Styroporschnitzel als Füllkörper verwendet werden.

Dadurch, dass vorgesehen ist, möglichst am Verpackungsort eine Vorrichtung zum Herstellen der Polsterungselemente zu installieren, wobei die Polsterungselemente fortlaufend dem jeweiligen Bedarf entsprechend oder im Takt der zu verpackenden Körper hergestellt werden, ist der Lagerraumbedarf an Verpackungsmaterialien gering. Das Herbeischaffen von Verpackungsmaterialien ab einem Verpackungsmateriallager entfällt. Die Vorrichtung zum Herstellen der Polsterungselemente ist so gebaut, dass die Formgebung der letzteren mit relativ wenig Aufwand an verschiedene Bedürfnisse und an die unterschiedlichen Formen von zu verpackenden Körpern adaptierbar ist. Indem man versucht, die Vorrichtung zum Herstellen der Polsterungselemente so einzustellen, dass das individuell auf einen zu verpackenden Körper angepasste Polsterungselement möglichst wenig einzelne mit Luft gefüllte Kammern aufweist und die Kammern möglichst gross gemacht werden, kann am Entsorgungsort durch das Aufschneiden von relativ wenigen Kammern das Verpackungs- und/oder Polsterungsmaterial mit sehr kleinem Volumen beseitigt werden.

Anhand von Figuren soll die vorliegende Erfindung nachfolgend beispielsweise näher beschrieben werden. Es zeigen
- **Fig. 1**: eine Aufsicht auf ein Polsterungselement mit zum Teil mit Luft gefüllten Kammern im ungefalteten Zustand, welches nicht Bestandteil der Erfindung ist,
- **Fig. 2**: eine isometrische Darstellung des Polsterungselementes gemäss der Fig. 1 in teilweise gefalteter Position mit einem zu verpackenden Körper,
- **Fig. 3**: die Seitenansicht einer Vorrichtung zum Herstellen von erfindungsgemässen Polsterungselementen,
- **Fig. 4**: eine Aufsicht auf die Vorrichtung gemäss der Fig. 3 bezogen auf die Linie A-A, und
- **Fig. 5**: eine isometrische Darstellung einer erfindungsgemäßen Ausführungsform eines Polsterungselementes.

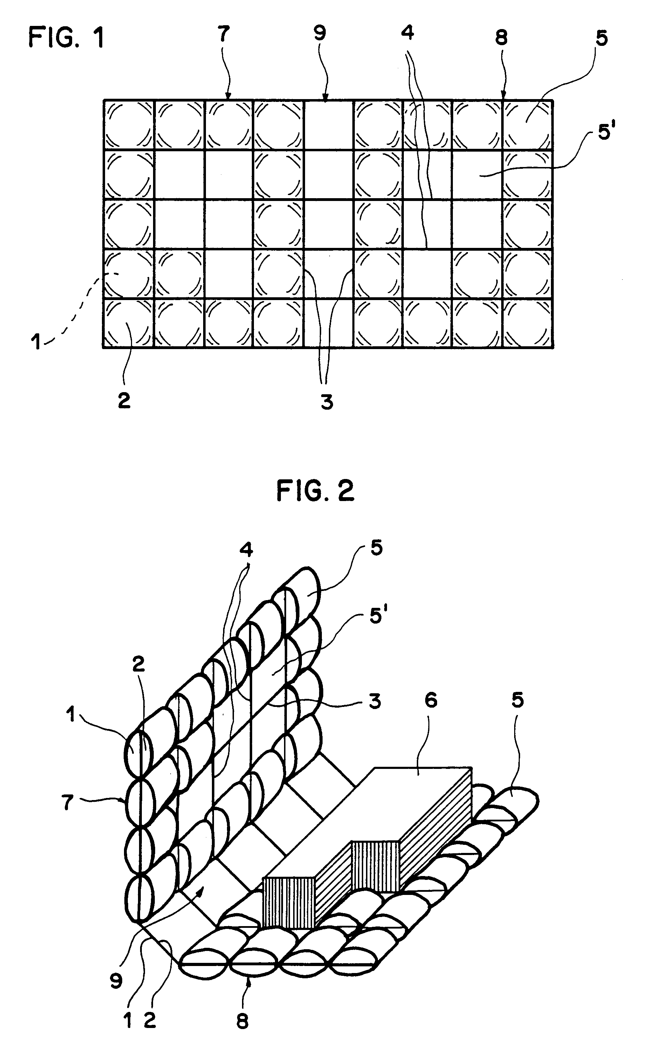

In den Fig. 1 und 2 ist ein erfindungsgemässes Polsterungselement dargestellt, dessen Form einem zu verpackenden Körper 6 angepasst worden ist. Das Polsterungselement umfasst eine erste Kunststoffolienbahn 1 und eine zweite Kunststoffolienbahn 2, welche übereinanderliegend miteinander verschweisst worden sind. Die Schweissstellen umfassen erste Schweissnähte 3 und zweite Schweissnähte 4, die sich etwa in einem rechten Winkel schneiden und sich in diesem Beispiel über die ganze Länge bzw. über die ganze Breite des Polsterungselementes erstrecken. Je zwei zueinander benachbarte erste Schweissnähte 3 sowie je zwei zueinander benachbarte zweite Schweissnähte 4 schliessen eine viereckförmige Kammer 5, 5' ein. Jede der so gebildeten Kammern 5, 5' kann entweder luftleer 5' oder teilweise oder ganz 5 mit Luft gefüllt sein. Vorzugsweise wird das Polsterungselement so hergestellt, dass die unter der Grundfläche und/oder über der Deckfläche eines zu verpackenden Körpers 6 zu liegen kommenden Kammern 5' nicht mit Luft gefüllt sind, während die an die Mantelfläche des Körpers anschliessenden Kammern 5 teilweise oder ganz mit Luft gefüllt sind. Dadurch wird auf der dem zu verpackenden Körper 6 zugewandten Seite des Polsterungselementes eine der Form des Körpers entsprechende oder angepasste Vertiefung gebildet, in der der zu verpackende Körper gehalten ist, während auf der dem Körper abgewandten Seite des Polsterungselementes durch die mit Luft gefüllten Kammern vom Körper abstehende Erhöhungen geformt sind. Eine optimale Verpackung wird dann erreicht, wenn das Polsterungselement, wie im aufgeführten Beispiel gezeigt, die Form eines Buchumschlages mit einer Oberseite 7, einer Unterseite 8 und einem Rücken 9 aufweist. Indem die den Rücken 9 bildenden Kammern nicht mit Luft gefüllt sind, kann das Polsterungselement bequem gefaltet werden. Der Körper 6 ist durch die sowohl in der Oberseite 7 als auch in der Unterseite 8 vorgesehenen Vertiefungen, die durch die nicht mit Luft gefüllten Kammern 5' bezüglich des Rückens 9 spiegelbildlich gebildet worden sind, gehalten.

Durch die Möglichkeit, sowohl die ersten Schweissnähte 3 als auch die zweiten Schweissnähte 4 mit ungleichen Abständen zueinander auszubilden, kann die Grösse einzelner Kammern variiert werden. Es ist auch denkbar, eine Grössenvariation der Kammern dadurch zu erzielen, dass sich einzelne Schweissnähte nicht ununterbrochen über die ganze Länge und/oder Breite des Polsterungselementes erstrecken. Durch die Grösse der Kammern wiederum und das mehr oder weniger starke Aufblasen einzelner Kammern ist die Dicke des Polsterungselementes festlegbar.

Es ist ohne weiteres ersichtlich und erkennbar, dass durch die vorgenannten Variationsmöglichkeiten das erfindungsgemässe Polsterungselement zum Lösen von nahezu allen Verpackungs-, Polsterungs- und/oder Lückenfüllproblemen eingesetzt werden kann, sowie praktisch jeder Form eines zu verpackenden Körpers 6 individuell anpassbar ist. Die Güte der Verpackung kommt Formteilen gleich. Durch die Verwendung von Kunststoffolien ist der Aufwand an Verpackungs- oder Polsterungsmaterial äusserst gering. Durch das Aufschneiden der relativ kleinen Anzahl luftgefüllter Kammern ist eine Entsorgung mit kleinstem Volumen möglich.

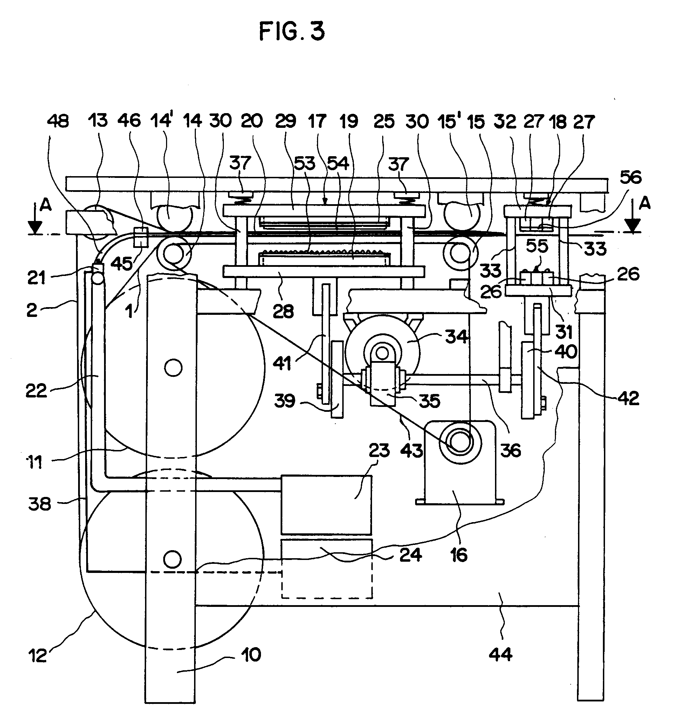

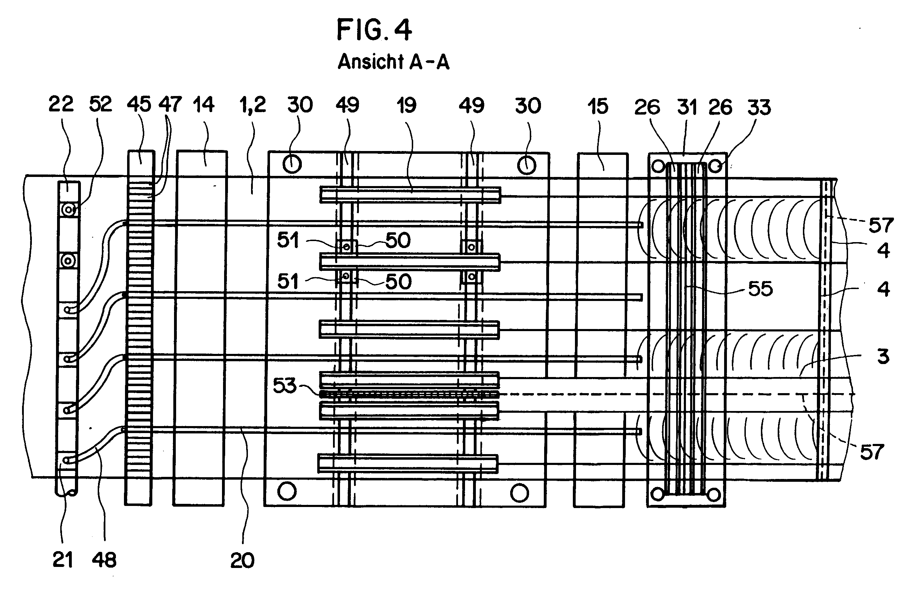

Wie bereits angetönt wird das Polsterungselement mit Vorzug nahe am Verwendungsort hergestellt. Eine Vorrichtung dazu ist beispielsweise in den Fig. 3 und 4 dargestellt. Die Fig. 3 zeigt eine Seitenansicht und die Fig. 4 eine Aufsicht bezüglich der Linie A-A in der Fig. 3. Mit 10 ist ein Traggestell der Vorrichtung nur auszugsweise gezeichnet. An einem in der Fig. 3 links angeordneten Teil des Traggestelles 10 sind eine erste 11 und eine zweite Kunststoffolienrolle 12 drehbar gelagert. Von diesen Rollen werden die erste 1 und die zweite Kunststoffolienbahn zum Herstellen des Polsterungselementes abgerollt. Je nach Grösse und Schwere der Kunststoffolienrollen 11, 12 können diese, obschon in der Fig. 3 nicht gezeigt, zum Vermindern des Abrollwiderstandes der Kunststoffolienbahnen 1, 2 motorisch angetrieben sein. Mit 14, 14'; 15, 15' sind je zwei erste und je zwei zweite Antriebswalzen gekennzeichnet. Sie erstrecken sich über die ganze Breite der Vorrichtung, sind übereinanderliegend angeordnet, derart, dass die Mantelflächen der beiden ersten Antriebswalzen 14, 14' und der beiden zweiten Antriebswalzen 15, 15' aneinandergepresst werden. Die Antriebswalzen dienen zum schrittweisen Vorschub der zwischen ihnen hindurchgeführten Kunststofffolienbahnen 1, 2. Je die unteren Antriebswalzen 14, 15 der beiden Antriebswalzenpaare sind mittels einem Riemen 43, der durch einen intermittierend einschaltbaren Antriebsmotor 16 für den Folienvorschub in Umlauf versetzt wird, angetrieben. Mindestens eine der Mantelflächen der ersten und/oder der zweiten Antriebswalzen weist einen elastischen Belag, beispielsweise aus Gummi oder vorzugsweise aus Schaumstoff, auf. Mit 13 ist eine Umlenkwalze für die zweite Kunststoffolienbahn 2 gekennzeichnet. Die ersten und zweiten Antriebswalzen 14, 14'; 15, 15' sind in der Längs- oder Vorschubrichtung der Kunststoffolienbahnen 1, 2 voneinander beabstandet. Zwischen den ersten und zweiten Antriebswalzen ist eine erste Schweissstation 17 und nach den zweiten Antriebswalzen 15, 15' ist eine zweite Schweissstation 18 angeordnet. Die erste Schweissstation 17 umfasst einen ersten Hubtisch 28, auf dem mehrere aufheizbare Schweissstäbe 19 angeordnet sind, die sich in Längsrichtung zu den Kunststoffolienbahnen 1, 2 erstrecken und die quer zu den genannten Kunststoffolienbahnen verschiebbar sind. Der erste Hubtisch 28 ist längs ersten Stabführungen 30 heb- und senkbar. In der Fig. 3 ist er in der abgesenkten Stellung gezeichnet. Die ersten Stabführungen 30 sind an einer dem ersten Hubtisch gegenüberliegenden ersten Gegenplatte 29 befestigt. Diese wiederum ist über Dämpfungselemente 37 mit einem als Deckplatte dienenden Teil des Traggestelles 10 verbunden. Auf der ersten Gegenplatte 29 sind erste Schweissstabgegenlagen 25, den jeweiligen Schweissstäben 19 gegenüberliegend und ebenfalls in der Querrichtung der Kunststoffolienbahnen 1, 2 verschiebbar, angeordnet. Die Kunststoffolienbahnen sind zwischen den Schweissstäben 19 und den ersten Schweissstabgegenlagen 25 hindurchgeführt. Mit 53 und 54 ist eine Durchtrenneinrichtung dargestellt. Ein gezahntes Messer 53 sowie eine Messergegenlage 54 dienen im gezeigten Beispiel dazu, zwischen zwei ersten Schweissnähten 3 Durchtrennungen 57, 58 praktisch gleichzeitig mit dem Erstellen der ersten Schweissnähte 3 anzubringen. Die Länge der gezahnten Schneide des Messers 53 entspricht vorzugsweise nahezu der Länge der Kammern 5 der zu erstellenden Polsterungelemente. Die gezahnte Schneide des Messers 53 ist derart ausgeführt, dass je nach Zustellweg des letzteren zwischen zwei ersten Schweissnähten 3 lediglich eine Perforation 57 der beiden Folienbahnen erreicht wird oder aber bei grösserer Zustellbewegung eine sich über die ganze Länge der Schneide des Messers 53 erstreckende Durchtrennstelle 58. Es hat sich gezeigt, dass durch das Anbringen der soeben genannten Durchtrennstellen beidseitig von jeder der Kammern 5 die letzteren besonders gut aufblasbar sind. Selbstverständlich sind in diesem Fall je zwei Schweissstäbe 19 und je zwei Schweissstabgegenlagen 25 sehr nahe am Messer 53 angeordnet. Eine sich nahezu über die ganze Länge der zu erstellenden Kammern erstreckende Durchtrennstelle zwischen zwei nahe nebeneinanderliegenden ersten Schweissnähten 3 kann auch mit einem Heizdraht, der mit einem Stromimpuls kurzzeitig stark aufgeheizt wird, erzielt werden. In einer bevorzugten Ausführungsform ist es möglich, je zwei parallel zueinander verlaufende, nahe nebeneinander angeordnete Schweissstäbe 19 und den dazwischen angeordneten, zum Durchtrennen der Folienbahnen bestimmten Heizdraht gemeinsam in einem einzigen Schweissbalken anzuordnen.

Die zweite Schweissstation 18 ist ähnlich aufgebaut. Sie umfasst einen zweiten Hubtisch 31, der über zweite Stabführungen 33 heb- und senkbar angeordnet ist. Auf dem zweiten Hubtisch 31 sind zwei Schweissstäbe 26 quer zu den Kunststoffolienbahnen 1, 2 verlaufend montiert. Eine zweite Gegenplatte 32 ist analog zur ersten Gegenplatte mit dem Traggestell 10 verbunden. Die zweite Gegenplatte 32 ist mit zwei zweiten Schweissstabgegenlagen 27 für die Schweissstäbe 26 der zweiten Schweissstation 18 ausgerüstet. Die Bezugszeichen 55 und 56 kennzeichnen eine weitere Durchtrenneinrichtung. Ein zum Durchtrennen der Kunststoffolienbahnen 1, 2 geeigneter erhitzbarer Draht 55 ist zwischen den beiden Schweissstäben 26 auf dem zweiten Hubtisch 31 angeordnet. Eine Heizdrahtgegenlage 56 liegt zwischen den beiden Schweissstabgegenlagen 27 der zweiten Gegenplatte 32, dem Heizdraht 55 gegenüber.

Mit 34 ist ein Hubtischmotor gekennzeichnet. Er dient zum Heben und Senken der genannten Hubtische 28, 31. Der Motor 34 treibt über ein Getriebe 35 eine Exzenterantriebswelle 36 an. An den Enden dieser Welle ist je eine Exzenterscheibe 39, 40 angeordnet. An der ersten Exzenterscheibe 39, die sich unterhalb des ersten Hubtisches 28 befindet, ist eine erste Pleuelstange 41 exzentrisch gelagert. Das andere Ende der Pleuelstange 41 ist mit dem ersten Hubtisch 28 schwenkbar verbunden. An der zweiten Exzenterscheibe 40 ist eine zweite Pleuelstange 42 exzentrisch gelagert, welche mit dem zweiten Hubtisch 31, ebenfalls schwenkbar, verbunden ist. Durch die Rotation der Exzenterscheiben 39, 40 werden die beiden Hubtische 28, 31 mit den Schweissstäben 19, 26 periodisch angehoben und abgesenkt. Im angehobenen Zustand werden die beiden übereinanderliegend angeordneten Kunststoffolienbahnen 1, 2 in der ersten Schweissstation 17 mit den ersten Schweissnähten 3 und in der zweiten Schweissstation 18 mit den im wesentlichen rechtwinklig dazu verlaufenden zweiten Schweissnähten 4 versehen. In der ersten Schweissstation werden die vorgenannten Durchtrennungen 57, 58 erstellt. Soll ein Polsterungselement abgetrennt werden, wird in der zweiten Schweissstation 18, wo normalerweise nur einer oder beide der zweiten Schweissstäbe 26 zum Erstellen von einer zweiten Schweissnaht 4 oder zwei parallel zueinander verlaufenden zweiten Schweissnähten 4 erregt werden, gleichzeitig mit dem Erregen der beiden Schweissstäbe 26 ebenfalls der Heizdraht 55 mit einem Stromimpuls derart aufgeheizt, dass ein Durchtrennen der Kunststoffolienbahnen 1 und 2 erfolgt. Es ist ebenfalls vorgesehen, anstelle des Heizdrahtes 55 und der Heizdrahtgegenlage 56 auch in der zweiten Schweissstation 18 ein gezahntes Messer und eine Messergegenlage, die sich beide im wesentlichen ebenfalls über die ganze Breite des zu erstellenden Polsterungselementes erstrecken, anzuordnen. Indem bei jedem Schweissvorgang immer die beiden der zweiten Schweissstäbe 26 erregt werden, ist es im letzteren Fall möglich, nach jeder der Kammern 5 eine sich über die ganze Breite des Polsterungselementes erstreckende Perforation 57 zwischen den beiden parallel zueinanderverlaufenden zweiten Schweissnähten 4 anzubringen. Verschiedene Grössen von Polsterungselementen können dadurch nach Bedarf abgerissen werden.

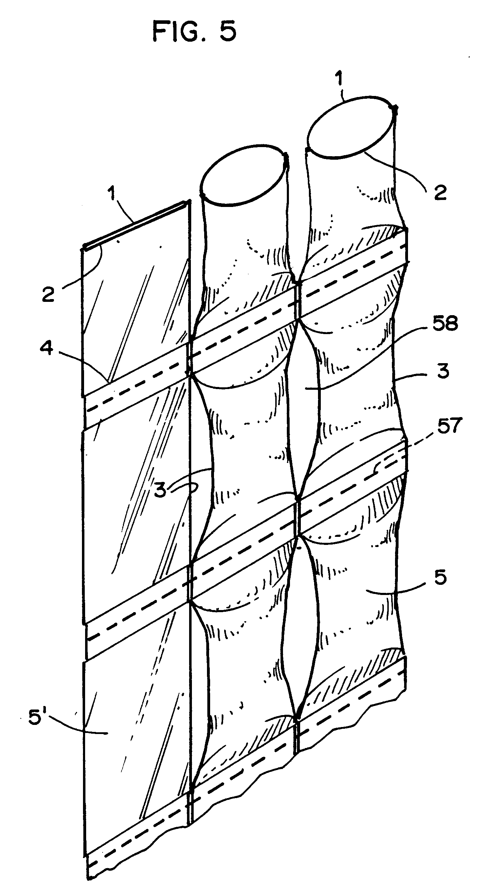

Ein Polsterungselement mit den vorgenannten Durchtrennstellen 58, die sich nahezu über die Länge der Kammern 5 parallel zu den ersten Schweissnähten 3 erstrecken und mit ebenfalls den genannten Perforationen 57, die sich über die ganze Breite parallel zu den zweiten Schweissnähten 4 erstrecken, ist in der Fig. 5 dargestellt. Ein überaus starkes Aufblasen der Kammern 5 wird durch das Vorhandensein der genannten Durchtrennstellen dadurch ermöglicht, dass sich bei jeder der Kammern beim Aufblasen in Richtung der ersten Schweissnähte 3 verlaufende Einschnürstellen bilden können.

Der Antriebsmotor 16 für den Kunststoffolienvorschub wird durch eine Steuereinheit 24 derart gesteuert, dass während dem Schweissvorgang kein Vorschub stattfindet. Nach dem Absenken der beiden Hubtische 28, 31 werden die Kunststoffolienbahnen 1, 2 soweit vorgeschoben, wie es zum Erreichen einer gewünschten Kammerlänge erforderlich ist. Die Breite der Kammern kann durch das Querverschieben der Schweissstäbe 19 der ersten Schweissstation 17 eingestellt werden. Dazu sind, wie aus der Fig. 4 ersichtlich ist, sowohl im ersten Hubtisch 28 als auch in der Gegenplatte 29, vorzugsweise je zwei schwalbenschwanzförmige Nuten 49 vorhanden, längs denen die Schweissstäbe 19 bzw. die ersten Schweissstabgegenlagen 25 verschiebbar sind. Mittels Nutensteinen 50, die mit Arretiermitteln 51 versehen sind, kann die eingestellte Lage jedes Schweissstabes 19 bzw. jeder ersten Schweissstabgegenlage 25 festgestellt werden.

In Längsrichtung zwischen den ersten und zweiten Kunststoffolienbahnen verlaufend, erstrecken sich Luftleitungsröhrchen 20, im wesentlichen von vor den ersten Antriebswalzen 14, 14' bis nach den zweiten Antriebswalzen 15, 15'. Die Luftleitungsröhrchen 20 sind vor den ersten Antriebswalzen 14, 14', bevor die erste und die zweite Kunststoffolienbahn 1, 2 übereinandergelegt werden, zwischen einer oberen 46 und einer unteren Halterung 45 festgeklemmt. Sie sind dabei quer zu den genannten Kunststoffolienbahnen so voneinander beabstandet, dass je eines der Luftleitungsröhrchen 20 zwischen zwei benachbarten Schweissstäben 19 bzw. Schweissstabgegenlagen 25 der ersten Schweissstation 17 verläuft. Mindestens eine der genannten Halterungen 45, 46 ist mit Längsrillen 47 versehen, in welche die Luftleitungsröhrchen 20 zum Fixieren ihrer Lage eingelegt werden können. Auf der den ersten Antriebswalzen 14, 14' abgewandten Seite der Halterungen 45, 46, ragen die Luftleitungsröhrchen mindestens soweit vor, dass an ihnen je ein Schlauch 48 aufgeschoben werden kann. Das andere Ende jedes Schlauches 48 ist mit je einem jedem der Luftleitungsröhrchen 20 zugeordneten Ventil 21 verbunden. Die Ventile 21 sind allesamt an einem zentralen Luftzufuhrrohr 22 angeordnet, welches zu einem einen Ueberdruck erzeugenden Ventilator 23 oder einer Druckluftquelle mündet. Jedes der Ventile 21 kann beispielsweise als elektromagnetisches Ventil ausgeführt und über je ein Steuerkabel 38 mit der Steuereinheit 24 verbunden sein. Durch das individuelle Ansteuern eines oder mehrerer der Ventile 21 können unmittelbar vor einem Schweissvorgang eine oder mehrere zu bildende Kammern mehr oder weniger mit Luft gefüllt werden, je nachdem, wie stark der Ueberdruck ist und wie weit oder wie lange jedes der Ventile geöffnet wird.

Die Mantelflächen insbesondere der zweiten Antriebswalzen 15, 15' sind so elastisch ausgeführt, dass sie sich den Luftleitungsröhrchen 20 anpassen und einen Luftaustritt im wesentlichen in Richtung der ersten Antriebswalzen 14, 14' verhindern.

Die Ausgänge der zum Herstellen eines entsprechenden Polsterungselementes nicht benutzten Ventile 21 sind mit Dichtungshüten 52 verschliessbar. Das Traggestell 10 ist mittels Abdeckungen 44 verkleidbar.

Natürlich ist es möglich, die Funktionsweise der hier beispielsweise gezeigten Vorrichtung zum Herstellen der Polsterungselemente weiter zu automatisieren. So könnte vorgesehen sein, die Steuereinheit 24 programmgesteuert auszuführen, wobei einem bestimmten Polsterungselement ein Herstellprogramm zugeordnet würde, anhand welchem die Einstellung der gegenseitigen Abstände der Schweissstäbe 19 bzw. der Schweissstabgegenlagen 25 der ersten Schweissstation, die Anordnung der Luftleitungsröhrchen 20 sowie der zu tätigende Vorschub zwischen zwei Schweissvorgängen automatisch eingestellt würden. Ebenfalls die Luftzufuhr durch die einzelnen Luftleitungsröhrchen zum jeweiligen Aufblasen der zu bildenden Kammern könnte programmgesteuert erfolgen. Im weiteren wäre es ebenfalls denkbar, nicht nur einen einen Ueberdruck erzeugenden Ventilator 23 vorzusehen, mit dem über die Ventile 21 eine gesteuerte Luftzufuhr durch die einzelnen Luftleitungsröhrchen 20 erfolgen kann, sondern ebenfalls eine Saugpumpe anzuordnen, mit welcher, über weitere Ventile gesteuert, zwischen den Folien vorhandene Restluft unmittelbar vor den zu bildenden und nicht mit Luft zu füllenden Kammern abgesaugt werden könnte. Natürlich wären in diesem Fall die dargestellten Ventile 21 und die nicht dargestellten weiteren Ventile, die mit der nicht dargestellten Saugpumpe verbunden wären, gegenseitig zu verriegeln.

## Patentansprüche

1. Polsterungselement zum Verpacken von Körpern, das aus zwei übereinanderliegenden Kunststoffolienbahnen (1, 2), die mittels Schweissnähten (3, 4) miteinander verbunden sind, gebildet ist, wobei mehrere erste (3) und mehrere zweite Schweissnähte (4) vorhanden sind, die sich etwa in einem rechten Winkel schneiden, wobei zwei benachbarte erste und zwei benachbarte zweite Schweissnähte viereckförmige Kammern (5, 5') bilden, wobei mindestens eine der Kammern (5) wenigstens teilweise mit Luft gefüllt ist, dadurch gekennzeichnet, dass der Abstand wenigstens zwischen je zwei der ersten Schweissnähte (3) abwechslungsweise entweder ein grosser oder ein relativ dazu kleiner Abstand ist, wobei zwischen je zwei benachbarten ersten Schweissnähten (3) mit einem grossen Abstand und je zwei benachbarten zweiten Schweissnähten (4) eine der Kammern (5, 5') eingeschlossen ist und dass zwischen zwei benachbarten ersten Schweissnähten (3) mit einem kleinen Abstand Durchtrennungen (58) der beiden Folienbahnen (2, 3) vorhanden sind, die sich nahezu über den Abstand von zwei einander benachbarten zweiten Schweissnähten (4) erstrecken.

2. Polsterungselement nach Anspruch 1, dadurch gekennzeichnet, dass zu dessen Anpassung an die Umrisse des zu verpackenden Körpers (6) nur bestimmte, von der Form des Körpers abhängige Kammern (5) wenigstens teilweise mit Luft gefüllt sind.

3. Polsterungselement nach Anspruch 1 oder 2, dadurch gekennzeichnet, dass es zum wenigstens dreiseitigen Umschliessen des zu verpackenden Körpers (6) vorgesehen ist, und ähnlich einem Buchumschlag eine Oberseite (7), einen Rücken (9) und eine Unterseite (8) aufweist, wobei die den Rücken (9) bildenden Kammern im wesentlichen luftleer sind.

4. Polsterungselement nach einem der Ansprüche 1 bis 3, dadurch gekennzeichnet, dass mindestens ein Teil der gegenseitigen Abstände der ersten Schweissnähte (3) und/oder der zweiten Schweissnähte (4), zwischen denen eine der Kammern (5, 5') gebildet ist, ungleich ist.

5. Polsterungselement nach einem der Ansprüche 1 bis 4, dadurch gekennzeichnet, dass mindestens zwischen zwei der zweiten Schweissnähte (4) Durchtrennungen (57, 58) vorhanden sind.

6. Polsterungselement nach Anspruch 5, dadurch gekennzeichnet, dass mindestens ein Teil der Durchtrennungen Perforationen (57) sind.

7. Polsterungselement nach Anspruch 5, dadurch gekennzeichnet, dass mindestens ein Teil der Durchtrennungen sich nahezu über die Breite der an sie angrenzenden Kammern (5, 5') erstreckende Durchtrennstellen (58) sind.

8. Vorrichtung zum Herstellen eines Polsterungselementes nach Anspruch 1 mit je einer Einrichtung zum Zuführen und zum Verschweissen von Kunststoffolien, wobei die Einrichtung zum Verschweissen von Kunststofffolien eine erste Schweissstation (17) zum Anbringen von ersten in Längsrichtung der Kunststoffolienbahnen (1, 2) verlaufenden Schweissnähten (3) und nachgeordnet eine zweite Schweissstation (18) zum Anbringen von zweiten Schweissnähten (4), die etwa rechtwinklig zu den ersten Schweissnähten (3) verlaufen, umfasst und wobei vor den Schweissstationen (17, 18) Antriebswalzen vorhanden sind, zwischen denen die Folienbahnen (1, 2) durchgeführt sind, dadurch gekennzeichnet, dass die erste Schweissstation (17) mehrere im wesentlichen parallel zueinander angeordnete Schweissstäbe (19) aufweist, wobei der Abstand zwischen je zwei dieser Schweissstäbe (19) abwechslungsweise entweder ein grosser oder ein relativ dazu kleiner Abstand ist und wobei mindestens zwischen zwei Schweissstäben (19) mit einem kleinen Abstand eine Durchtrenneinrichtung (53, 54; 55, 56) angeordnet ist, dass sowohl vor der ersten Schweissstation (17) als auch vor der zweiten Schweissstation (18) je zwei erste (14, 14') und zweite Antriebswalzen (15, 15') vorhanden sind und dass Luftleitungsröhrchen (20) vorgesehen sind, die sich von vor den ersten Antriebswalzen (14, 14') bis nach den zweiten Antriebswalzen (15, 15') in Längsrichtung der Kunststofffolienbahnen (1, 2) erstrecken, wobei im wesentlichen je eines der Luftleitungsröhrchen (20) zwischen je zwei benachbarten Schweissstäben (19) mit einem grossen Abstand verläuft.

9. Vorrichtung nach Anspruch 8, dadurch gekennzeichent, dass jedes der Luftleitungsröhrchen (20) über je ein Ventil (21) an eine gemeinsame Luftzufuhreinrichtung (22, 23) angeschlossen ist.

10. Vorrichtung nach Anspruch 9, dadurch gekennzeichnet, dass eine Steuereinheit (24) vorhanden ist, mit welcher im wesentlichen vor jedem Betätigen der zweiten Schweissstation (18) eines oder mehrere der Ventile (21) zum Zuleiten von Luft an das zugeordnete Luftleitungsröhrchen (20) in einen mehr oder weniger geöffneten Zustand versetzbar sind.

11. Vorrichtung nach einem der Ansprüche 8 bis 10, dadurch gekennzeichnet, dass die Schweissstäbe (19) der ersten Schweissstation (17) sowie die Luftleitungsröhrchen (20) quer zur Längsrichtung der Kunststoffolienbahnen (1, 2) verschiebbar sind.

12. Vorrichtung nach einem der Ansprüche 8 bis 11, dadurch gekennzeichnet, dass die wenigstens eine Durchtrenneinrichtung mit einem Messer (53) und einer Messergegenlage (54) oder mit einem Heizdraht (55) und einer Heizdrahtgegenlage (56) ausgerüstet ist.

13. Vorrichtung nach einem der Ansprüche 8 bis 12, dadurch gekennzeichnet, dass eine weitere Durchtrenneinrichtung (53, 54; 55, 56) zwischen zwei zweiten Schweissstäben (26) der zweiten Schweissstation (18) angeordnet ist.

## Claims

1. Padding element for the packaging of objects, formed by two synthetic foil runs (1, 2) arranged one over the other and joined by means of welding seams (3, 4), several first (3) and several second welding seams (4) being provided, which intersect roughly at a right angle, two adjacent first (3) and two adjacent second welding seams (4) forming four corner-shaped chambers (5, 5'), at least one of the chambers (5) being at least partially filled with air, characterized in that the spacing between at least each two of the first welding seams (3) is alternately either a large or a relatively small spacing, one of the chambers being enclosed between each two adjacent first welding seams (3) with a large spacing apart and each two adjacent second welding seams (4), and in that cutoff lines (58) of the two foil runs (2, 3) are provided between two adjacent first welding seams (3) with a small spacing apart, which cutoff lines extend almost over the spacing apart of two adjacent second welding seams (4).

2. Padding element according to claim 1, characterized in that to effect adjustment to the contours of the object to be packed (6) only specific chambers (5) - dependent on the shape of the object to be packed (6) - are at least partially filled with air.

3. Padding element according to claim 1 or 2, characterized in that it is designed to enclose the object to be packed (6) on at least three sides, and that, similar to a book cover, it has a top cover (7), a back (9) and a bottom cover (8), the chambers forming the back (9) being essentially void of air.

4. Padding element according to one of the claims 1 to 3, characterized in that at least some of the mutual distances of the first welding seams (3) and/or of the second welding seams (4), between which one of the chambers (5, 5') is formed, are unequal.

5. Padding element according to one of the claims 1 to 4, characterized in that cutoff lines (57, 58) are provided between at least two of the second welding seams (4).

6. Padding element according to claim 5, characterized in that at least some of the cutoff lines are perforations (57).

7. Padding element according to claim 5, characterized in that at least some of the cutoffs are cutoff places (58) extending almost over the entire width of the chambers (5, 5') adjacent to them.

8. Device for the manufacture of a padding element according to claim 1, with in each case one contrivance for synthetic foil feed and one contrivance for synthetic foil welding, the contrivance for synthetic foil welding comprising a first welding station (17) for applying the first welding seams (3) which run longitudinally to the synthetic foil runs (1, 2), followed by a second welding station (18) for applying the second welding seams (4), which run approximately at right angles to the first welding seams (3), and drive rollers being provided before the welding stations (17, 18), between which rollers the foil runs are conducted, characterized in that the first welding station (17) has several welding rods (19) arranged essentially parallel to one another, the spacing between each two of these welding rods (19) being alternately a large or a relatively small spacing and a cutting device (53, 54; 55, 56) being disposed between at least two welding rods (19) with a small spacing, in that both before the first welding station (17) and before the second welding station (18) in each case two first (14, 14') and second drive rollers (15, 15') are provided and in that air feed tubes (20) are provided which run from before the first drive rollers (14, 14') to after the second drive rollers (15, 15') in longitudinal direction of the synthetic foil runs (1, 2), one each of the air feed tubes (20) essentially running between each two adjacent welding rods (19) with a large spacing.

9. Device according to claim 8, characterized in that each of the air feed tubes (20) is connected to a central air supply device (22, 23), in each case via a valve (21).

10. Device according to claim 9, characterized in that a control unit (24) is provided by means of which one or more of the valves (21) that supply air to the allocated air feed tube (20) can essentially be set to a more or less open position prior to each operation of the second welding station (18).

11. Device according to one of the claims 8 to 10, characterized in that the welding rods (19) of the first welding station (17) as well as the air feed tubes (20) can be moved transversely to the longitudinal direction of the synthetic foil runs (1, 2).

12. Device according to one of the claims 8 to 11, characterized in that at least the one cutting device is equipped with a blade (53) and a blade counterpiece (54) or with a heatable wire (55) and a heatable wire counterpiece (56).

13. Device according to one of the claims 8 to 12, characterized in that a further cutting device (53, 54; 55, 56) is disposed between two second welding rods (26) of the second welding station (18).

## Revendications

1. Elément rembourré pour l'emballage de corps, formé de deux feuilles synthétiques (1, 2) l'une sur l'autre, fixées ensemble par des cordons de soudure (3, 4), dans lequel plusieurs premiers (3) et plusieurs deuxièmes (4) cordons de soudure sont présents, qui se coupent approximativement à angle droit, deux premiers cordons de soudure voisins et deux deuxièmes cordons de soudure voisins formant des chambres rectangulaires (5, 5'), au moins une des chambres (5) étant au moins partiellement remplie d'air, caractérisé en ce que la distance au moins entre deux des premiers cordons de soudure (3) est alternativement soit une grande, soit petite en comparaison, une chambre (5, 5') étant comprise entre chaque premiers cordons de soudure (3) voisins avec une grande distance et chaque deuxième cordons de soudure (4) voisins, des séparations (58) des deux feuilles (2 3) étant présentes entre deux premiers cordons de soudure (3) voisins séparés par une petite distance, les séparations s'étendant presque sur la distance entre deux deuxièmes cordons de soudure (4) voisins l'un de l'autre.

2. Elément rembourré selon la revendication 1, caractérisé en ce que, pour permettre l'adaptation au contour du corps à emballer (6), seuls certaines chambres (5), selon la forme du corps, sont au moins partiellement remplies d'air.

3. Elément rembourré selon la revendication 1 ou 2, caractérisé en ce qu'il est prévu pour entourer au moins trois faces du corps à emballer (6), et, comme une couverture de livre, comporte une couverture supérieure (7), un dos (9) et une couverture inférieure (8), les chambres formant le dos (9) étant pour l'essentiel vides d'air.

4. Elément rembourré selon l'une des revendications 1 à 3, caractérisé en ce que au moins une partie des distances mutuelles entre les premiers cordons de soudure (3) et/ou entre les deuxièmes cordons de soudure (4) entre lesquels une des chambres (5, 5') est formée, est inégale.

5. Elément rembourré selon l'une des revendications 1 à 4, caractérisé en ce que des séparations (57, 58) sont présentes entre au moins deux des deuxièmes cordons de soudure (4).

6. Elément rembourré selon la revendication 5, caractérisé en ce qu'une partie des séparations sont des perforations (57).

7. Elément rembourré selon la revendication 5, caractérisé en ce que au moins une partie des séparations sont des zones de séparation (58) s'étendant presque sur la largeur des chambres (5, 5') avoisinantes.

8. Dispositif de production d'un élément rembourré selon la revendication 1, comprenant à la fois un dispositif d'apport et de soudage de feuilles synthétiques, le dispositif de soudage de feuilles synthétiques comprenant une première station de soudage (17) pour effectuer les premiers cordons de soudure (3) s'étendant dans la direction longitudinale des feuilles synthétiques (1, 2) ainsi qu'une deuxième station de soudage (18) en aval pour effectuer les deuxièmes cordons de soudure (4) s'étendant approximativement perpendiculairement aux premiers cordons de soudure (3), des rouleaux de transport à travers lesquels les feuilles (1, 2) sont conduites étant prévus avant les stations de soudage (17, 18), caractérisé en ce que la première station de soudage (17) présente plusieurs bâtons de soudage (19) placés pour l'essentiel parallèlement les uns aux autres, la distance entre deux de ces bâtons de soudage (19) étant alternativement une soit grande, soit petite en comparaison, un dispositif de séparation (53, 54; 55, 56) étant placé au moins entre deux bâtons de soudage (19) avec une petite distance, et en ce que deux premiers (14, 14'), respectivement deux deuxièmes (15, 15') rouleaux de transport sont présents avant la première station de soudage (17), respectivement aussi avant la deuxième station de soudage (18), des petits tuyaux d'apport d'air (20) étant prévus qui s'étendent depuis avant les premiers rouleaux de transport (14, 14') jusqu'à après les deuxièmes rouleaux de transport (15, 15') dans la direction longitudinale des feuilles synthétiques (1, 2), un petit tuyau d'apport d'air (20) étant pour l'essentiel placé chaque fois entre deux bâtons de soudage (19) avec une grande distance.

9. Dispositif selon la revendication 8, caractérisé en ce que chacun des petits tuyaux d'apport d'air (20) est connecté via une soupape individuelle à un dispositif d'amenée d'air en commun (22, 23).

10. Dispositif selon la revendication 9, caractérisé en ce qu'une unité de commande (24) est présente, permettant, pour l'essentiel avant chaque mise en oeuvre de la deuxième station de soudage (18), de placer une ou plusieurs des soupapes (21) dans un état plus ou moins ouvert pour diriger l'air dans le petit tuyau d'apport d'air (20) correspondant.

11. Dispositif selon l'une des revendications 8 à 10, caractérisé en ce que les bâtons de soudage (19) de la première station de soudage (17) ainsi que les petits tuyaux d'apport d'air (20) sont déplaçables perpendiculairement à la direction longitudinale des feuilles synthétiques (1, 2).

12. Dispositif selon l'une des revendications 8 à 11, caractérisé en ce que le ou les dispositifs de séparation sont munis d'une lame (53) et d'une contre-lame (54) ou d'un fil de chauffe (55) et d'une contre-pièce (56) correspondante.

13. Dispositif selon l'une des revendications 8 à 12, caractérisé en ce qu'un autre dispositif de séparation (53, 54; 55, 56) est placé entre deux deuxièmes bâtons de soudage de la deuxième station de soudage.
